# EUROPÄISCHE PATENTSCHRIFT

(11) **EP 3 419 737 B1**
(45) Veröffentlichungstag und Bekanntmachung des Hinweises auf die Patenterteilung: **07.04.2021**
(21) Anmeldenummer: 17705572.0
(22) Anmeldetag: 10.02.2017
(51) Int. Cl.: B01D 46/10, B01D 46/52

(54) **FILTERELEMENT, INSBESONDERE ZUR GASFILTRATION**
FILTER ELEMENT, IN PARTICULAR FOR GAS FILTRATION
ÉLÉMENT FILTRANT, EN PARTICULIER POUR LA FILTRATION DE GAZ

(30) Priorität: 26.02.2016 DE 102016002247
(43) Veröffentlichungstag der Anmeldung: 02.01.2019
(73) Patentinhaber: MANN+HUMMEL GmbH, 71636 Ludwigsburg (DE)
(72) Erfinder: NEEF, Pascal, 78647 Trossingen (DE); PEREIRA MADEIRA, Pedro Miguel, 74321 Bietigheim-Bissingen (DE); HEIM, Michael, 70825 Korntal-Münchingen (US); DONAUER, Nadine, 70736 Fellbach (DE); WÜBBELING, Martin, 68161 Mannheim (DE)
(74) Vertreter: Seyboth, Matthias
(86) Internationale Anmeldenummer: PCT/EP2017/052960
(87) Internationale Veröffentlichungsnummer: WO 2017/144287

(56) Entgegenhaltungen:
- EP-A1- 2 794 061
- WO-A1-2013/104794
- DE-A1-102012 005 731

## Beschreibung

### Technisches Gebiet

Die Erfindung bezieht sich auf ein Filterelement, insbesondere zur Gasfiltration, beispielsweise für einen Luftfilter, nach dem Oberbegriff des Anspruches 1.

### Stand der Technik

Aus der DE 10 2010 025 971 B4 ist ein Luftfilter bekannt, der zur Filtration der Ansaugluft von Brennkraftmaschinen verwendet wird. Der Luftfilter umfasst einen Filtermediumkörper, der als Faltenfilter ausgebildet ist und Klebstoffraupen zur Separierung der Roh- von der Reinseite aufweist. Die Klebstoffraupen füllen den Faltenzwischenraum im Seitenbereich des Faltenfilters aus und erstrecken sich zwischen den an der Roh- und der Reinseite liegenden Faltenspitzen des Faltenfilters.

Das Filterelement ist in einem Filtergehäuse aufgenommen, das von einem Gehäusedeckel zu verschließen ist. An der Deckelinnenseite befindet sich in einer umlaufenden Nut eine Gehäusedichtung, die im Randbereich an der Reinseite das Filterelement beaufschlagt und dieses in seinen Sitz im aufnehmenden Filtergehäuse drückt.

Die WO 2013/104794 beschreibt ein Filterelement mit variierender Faltentiefe.

### Offenbarung der Erfindung

Der Erfindung liegt die Aufgabe zugrunde, mit einfachen konstruktiven Maßnahmen ein Filterelement in der Weise auszubilden, dass eine hohe Filtrationsleistung ermöglicht wird.

Diese Aufgabe wird erfindungsgemäß mit den Merkmalen des Anspruches 1 gelöst. Die Unteransprüche geben zweckmäßige Weiterbildungen an.

Das erfindungsgemäße Filterelement wird vorzugsweise zur Gasfiltration eingesetzt, beispielsweise als Luftfilter im Ansaugtrakt einer Brennkraftmaschine, vorzugsweise für einen Lastkraftwagen. Es kommt aber auch eine Verwendung des Filterelementes zur Flüssigkeitsfiltration in Betracht.

Das Filterelement umfasst einen Filtermediumkörper, das aus einem Filtermaterial gefertigt ist und an dem die Filtration stattfindet. Sowohl an der Anströmseite als auch an der Abströmseite ist jeweils ein Dichtungs- oder Stützelement am Filtermediumkörper angeordnet, über die sich das Filterelement im aufnehmenden Filtergehäuse und einem auf das Filtergehäuse aufzusetzenden Gehäusedeckel abstützt.

Über das Dichtungs- bzw. Stützelement werden Haltekräfte in das Filterelement eingeleitet bzw. durch dieses übertragen, wobei die Haltekräfte an einer Seite von dem das Filterelement aufnehmenden Filtergehäuse aufgenommen werden und anderenends von dem Gehäusedeckel.

Die Anströmseite liegt in einer Ebene, wohingegen die gegenüberliegende Seite mindestens zwei Abschnitte mit unterschiedlichem Abstand zu der in einer Ebene liegenden Anströmseite aufweist. Dementsprechend gibt es bei dem Filtermediumkörper eine geradflächige Seite, die die Anströmseite bildet, und gegenüberliegend eine Seite mit verschiedenen Abschnitten, die entsprechend die Abströmseite bildet.

Diese Ausführung erlaubt es, das Filterelement an unterschiedliche Einbausituationen im Filtergehäuse in optimaler Weise anzupassen. Hierdurch ist es möglich, den Aufnahmeraum im Filtergehäuse, in den das Filterelement eingesetzt wird, auch bei nicht-geradflächiger Abströmseite oder bei nicht-parallelen Anström- und Abströmseiten vollständig oder zumindest weitgehend vollständig mit dem Filterelement auszufüllen, so dass ein entsprechend hoher Befüllungsgrad des Aufnahmeraums und eine verbesserte Filtrationsleistung der Filtereinrichtung gegeben ist. Dies erlaubt es beispielsweise, nicht-quaderförmige Filterelemente zu verwenden, die in entsprechend geformte Aufnahmeräume im Filtergehäuse einsetzbar sind und die Aufnahmeräume weitgehend ausfüllen. Es kann beispielsweise auf Kanäle, Rohre oder dergleichen Rücksicht genommen werden, die in den Aufnahmeraum im Filtergehäuse einragen und diesen einschränken. Insgesamt kann der Aufnahmeraum besser mit dem Filterelement und dem Filtermediumkörper ausgefüllt und damit die Filtrationsleistung erhöht werden.

Gemäß einer vorteilhaften Ausführung weist diejenige Seite, welche der in einer Ebene liegenden Seite gegenüberliegt, einen gekrümmten Abschnitt auf, über den beispielsweise eine Anpassung an ein Strömungsrohr möglich ist, über das Fluid zu- oder abgeleitet wird. Der gekrümmte Abschnitt ist insbesondere nach innen gekrümmt, so dass Filtermaterial des Filtermediumkörpers mit einer entsprechenden Querschnittsfläche ausgeschnitten ist und sich der Filtermediumkörper zum Beispiel an ein in den Aufnahmeraum einragendes Rohr oder einen Kanal anschmiegen kann. Die Krümmung dieses Abschnittes ist beispielsweise teilkreisförmig.

Erfindungsgemäß weist diejenige Seite, welche der in einer Ebene liegenden Seite gegenüberliegt, mindestens einen insbesondere direkt zwischen zwei äußeren Abschnitten liegenden Abschnitt auf, der mindestens in einem Teil des Abschnitts einen geringeren Abstand zu der in einer Ebene liegenden Anströmseite aufweist als die zwei äußeren Abschnitte. Dieser insbesondere direkt zwischen zwei äußeren Abschnitten liegenden Abschnitt ist wie oben beschrieben als gekrümmter Abschnitt ausgeführt. Durch diese Ausführung kann das mindestens eine Dichtungs- bzw. Stützelement auf der Seite, welche der in einer Ebene liegenden Seite gegenüberliegt, nicht-durchgehend ausgeführt werden, insbesondere in zwei Dichtungs- bzw. Stützelement-Teilen mit unterschiedlichem Abstand zu der in einer Ebene liegenden Anströmseite, die insbesondere am jeweiligen Abschnitt mit unterschiedlichem Abstand zu der in einer Ebene liegenden Anströmseite angeordnet und/oder diesem zugeordnet sind. Durch diese Konfiguration können insbesondere streifenförmige Dichtungs- bzw. Stützelement-Teile, die insbesondere in unterschiedlichen Abständen zur in einer Ebene liegenden Anströmseite angeordnet sind, in einem Arbeitsgang, vorteilhaft durch einen Gießvorgang mit einer aufschäumenden und/oder nach dem Gießen aushärtende Masse wie Polyurethan in mindestens einer Gießschale, hergestellt werden. Weiter bevorzugt können die äußeren Abschnitte ebene Abschnitte, insbesondere zueinander parallele Abschnitte und/oder zur in einer Ebene liegenden Anströmseite parallele Abschnitte sein. Dadurch wird die Herstellung in einem Arbeitsgang, insbesondere durch auf unterschiedlichen, aber zueinander parallelen Flüssigkeitsspiegel beim Gießen, weiter erleichtert. Es sei verstanden, dass dabei die Unterseiten, d. h. die der in einer Ebene liegenden Anströmseite abgewandten Stirnseiten der gegossenen Dichtungs- bzw. Stützelement-Teile auch leicht zueinander angewinkelt sein könne, solange durch den jeweils ebenen und bei der Herstellung zur Schwerkraft horizontalen Flüssigkeitsspiegel der Gießmasse eine vollständige Füllung für die jeweiligen Dichtungs- bzw. Stützelement-Teile erzielt wird.

Die Seite, welche der in einer Ebene liegenden Seite gegenüberliegt, kann auch zwei ebene Abschnitte aufweisen, die gegebenenfalls parallel zueinander und parallel zur gegenüberliegenden Seite verlaufen, jedoch einen unterschiedlichen Abstand zur gegenüberliegenden Seite besitzen. Der am dieser Seite vorhandene gekrümmte Abschnitt erstreckt sich zwischen den beiden ebenen Abschnitten. Auch die beiden ebenen, mit unterschiedlichem Abstand zur gegenüberliegenden Seite angeordneten Abschnitte erlauben eine Anpassung an eine entsprechende Querschnittsgeometrie des Aufnahmeraums im Filtergehäuse.

Darüber hinaus sind weitere Geometrien für die Seite am Filtermediumkörper möglich, die der in einer Ebene liegenden Anströmseite gegenüberliegt. In einer nicht erfindungsgemäßen Ausführung sind sowohl die Anströmseite als auch die Abströmseite eben ausgebildet, schließen jedoch zueinander einen Winkel ein und liegen somit nicht parallel zueinander. Es ist möglich, zwei oder mehr ebene Abschnitte an einer Seite vorzusehen, die mit der gegenüberliegenden Seite einen Winkel einschließen, jedoch nicht in einer gemeinsamen Ebene liegen, sondern parallel versetzt zueinander oder ihrerseits winklig zueinander. Schließlich kommen auch Ausführungen in Betracht, bei denen mehrere gekrümmte Abschnitte, jedoch mit unterschiedlicher oder gegenläufiger Krümmung vorgesehen sind, kombiniert mit ebenen Abschnitten.

Das Dichtungs- bzw. Stützelement an der ebenen Anströmseite ist vorteilhafterweise umlaufend ausgebildet und schließt die ebene Anströmseite in deren Randbereich ein. Auch die gegenüberliegende Seite mit zumindest zwei Abschnitten mit unterschiedlichem Abstand zur ebenen Seite kann gegebenenfalls von einem umlaufenden Dichtungs- bzw. Stützelement eingeschlossen sein. Erfindungsgemäß ist aber an der Seite mit mindestens zwei Abschnitten mit unterschiedlichem Abstand zur gegenüberliegenden, ebenen Seite, ein nicht-durchgehend ausgebildetes Dichtungs- bzw. Stützelement angeordnet. Der gekrümmte Abschnitt ist frei von dem Dichtungs- bzw. Stützelement.

In einer vorteilhaften Ausführung ist an der Außenseite des Filtermediumkörpers mindestens eine sich zwischen den Dichtungs- bzw. Stützelementen erstreckende Klebstoffraupe, beispielsweise eine Leimraupe angeordnet. Die Klebstoffraupe befindet sich insbesondere an oder benachbart zu einer Außenseite des Filtermediumkörpers und erstreckt sich zwischen den Dichtungs- bzw. Stützelementen an der Anström- und Abströmseite des Filtermediumkörpers. Die mindestens eine Klebstoffraupe bildet ein sich zwischen den gegenüberliegenden Dichtungs- bzw. Stützelementen erstreckendes Kraftübertragungsteil. In dieser Ausführung ist der Filtermediumkörper von den Haltekräften entlastet, die beim Einsetzen des Filterelementes in das aufnehmende Filtergehäuse und dem Aufsetzen des Gehäusedeckels auf das Filterelement einwirken. Mit dem Aufsetzen des Gehäusedeckels auf das Filtergehäuse wird üblicherweise eine das Filterelement in seinen Sitz im Filtergehäuse hineinpressende Kraft erzeugt, die über die Dichtungs- und Stützelemente sowie die zwischenliegende Klebstoffraupe übertragen wird. Auf diese Weise wird der Filtermediumkörper des Filterelementes von Kräften entlastet, so dass auch die Gefahr einer Schädigung des Filterelementes reduziert und die Lebensdauer des Filterelementes erhöht ist.

Gemäß einer weiteren vorteilhaften Ausführung ist der Filtermediumkörper als ein Faltenfilter ausgebildet, dessen Faltenspitzen an der Anströmseite und der Abströmseite liegen. Dementsprechend erstrecken sich die Stirnkanten der Falten unter einem Winkel zur Anström- und Abströmseite des Filtermediumkörpers. Sofern eine Klebstoffraupe am Filtermediumkörper angeordnet ist, füllt diese vorteilhafterweise mehrere Faltenzwischenräume aus und bildet eine sich über mehrere Stirnkanten erstreckende Stirnkantenverleimung, wodurch zusätzlich zur Kraftübertragung zwischen den Dichtungs- bzw. Stützelementen an der Anström- bzw. Abströmseite auch eine Stabilisierung der Falten erreicht wird. Es kommt sowohl ein Einbringen der Stirnkantenverleimung ausschließlich in die der Anströmseite zugewandten Faltenzwischenräume als auch ein Einbringen der Stirnkantenverleimung in die der Anströmseite sowie der Abströmseite zugewandten Faltenzwischenräume in Betracht.

In einer alternativen Ausführung ist der Filtermediumkörper als ein Blockfilter ohne Filterfalten ausgebildet. Auch in diesem Fall können sich an oder benachbart zur Außenseite des Filtermediumkörpers eine oder mehrere Klebstoffraupen zwischen den Dichtungs- bzw. Stützelementen an der Anström- und der Abströmseite erstrecken.

Gemäß einer weiteren vorteilhaften Ausführung ist das mindestens eine anströmseitig angeordnete Dichtungs- bzw. Stützelement von dem mindestens einen abströmseitig angeordneten Dichtungs- bzw. Stützelement beabstandet. Dies bedeutet insbesondere, dass keine unmittelbare mechanische Verbindung zwischen anströmseitig angeordneten Dichtungs- bzw. Stützelementen und abströmseitig angeordneten Dichtungs- bzw. Stützelementen vorhanden ist, sondern nur eine mittelbare Verbindung über den Filtermediumkörper und/oder im Filtermediumkörper angeordnete Komponenten, insbesondere einer Stirnkantenverleimung. Der Abstand zwischen anströmseitig angeordneten Dichtungs- bzw. Stützelementen und abströmseitig angeordneten Dichtungs- bzw. Stützelementen ist dabei bevorzugt im Wesentlichen durch den lokalen Abstand zwischen Anström- und Abströmseite definiert und kann in einer vorteilhaften Weiterbildung, da bevorzugt beidseitig die Dichtungs- bzw. Stützelemente jeweils nahe der An- oder Abströmseite angeordnet sind, insbesondere mindestens jeweils 70 %, bevorzugt mindestens jeweils 80 %, besonders bevorzugt mindestens 90 % des lokalen Abstands zwischen Anström- und Abströmseite betragen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 in perspektivischer Ansicht ein Filterelement in nicht erfindungsgemäßer Ausführung mit einem als Faltenfilter ausgeführten Filtermediumkörper, der sowohl an der Anströmseite als auch an der Abströmseite jeweils ein Dichtungs- bzw. Stützelement aufweist, wobei an der Außenseite des Filtermediumkörpers Klebstoffraupen in die Filterfalten eingebracht sind, die sich zwischen den gegenüberliegenden Dichtungs- bzw. Stützelementen erstrecken,
Fig. 2 eine Filtereinrichtung mit einem Filtergehäuse und einem Gehäusedeckel, wobei im Filtergehäuse ein Filterelement gemäß Fig. 1 aufgenommen ist,
Fig. 3 ein Filterelement in einer erfindungsgemäßen Ausführung, bei der die Abströmseite aus zwei Ebenen parallel zur Anströmseite, jedoch in unterschiedlichem Abstand, und einem zwischenliegenden, teilkreisförmig gekrümmten Abschnitt besteht,
Fig. 4 eine Filtereinrichtung mit dem Filterelement gemäß Fig. 3 im Schnitt,
Fig. 5 eine Filtereinrichtung mit den verschiedenen Bauteilen in Explosionsdarstellung,
Fig. 6 eine Filtereinrichtung mit einem Filterelement in einer nicht erfindungsgemäßen Ausführungsvariante, bei der Anström- und Abströmseite jeweils geradflächig ausgebildet sind, jedoch winklig zueinander ausgerichtet sind,
Fig. 7 einen Schnitt durch den Seitenbereich eines Filterelementes in einer weiteren Ausführung.

In den Figuren sind gleiche Bauteile mit gleichen Bezugszeichen versehen.

### Ausführungsform(en) der Erfindung

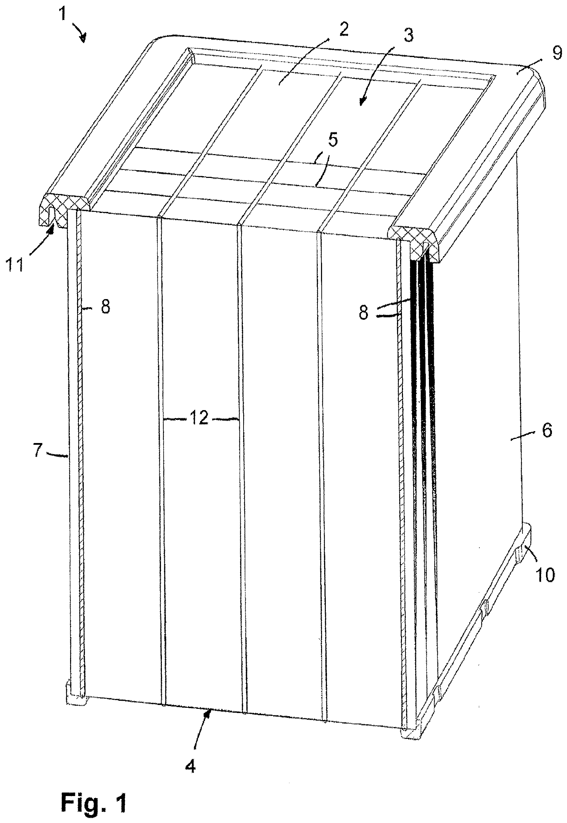

In Fig. 1 ist ein Filterelement 1 dargestellt, das beispielsweise zur Luftfiltration der einer Brennkraftmaschine zuzuführenden Verbrennungsluft in einem Fahrzeug wie zum Beispiel einem Lastkraftwagen eingesetzt werden kann. Das Filterelement 1 umfasst einen Filtermediumkörper 2 aus einem Filtermaterial, an dem die Filtration stattfindet. Die Durchströmung des Filterelementes 1 erfolgt über die in der Darstellung gemäß Fig. 1 oben liegende Anströmseite 3 in Richtung der unten liegenden Abströmseite 4.

Der Filtermediumkörper 2 ist als Faltenfilter ausgebildet und weist eine Reihe von Filterfalten auf, deren Faltenspitzen 5 an der Anströmseite 3 und der gegenüberliegenden Abströmseite 4 liegen und deren Stirnkanten den seitlichen Außenseiten 6 und 7 des Filtermediumkörpers zugewandt sind. Benachbart zu den seitlichen Außenseiten 6, 7 sind Klebstoffraupen 8 am Filtermediumkörper 2 angeordnet, die die Filterfalten ausfüllen, welche zur Anströmseite 3 hin offen sind. Die seitlichen Klebstoffraupen 8 verschließen die Filterfalten an den Außenseiten 6 bzw. 7 und stellen eine axiale Durchströmung des Filtermediumkörpers 2 von der Anströmseite 3 zur Abströmseite 4 sicher. Zudem stabilisieren die Klebstoffraupen 8 die Falten des Filtermediumkörpers.

An der Anströmseite 3 befindet sich ein erstes Dichtungs- bzw. Stützelement 9, das umlaufend ausgebildet ist und im Randbereich angeordnet ist, so dass die gesamte, in einer Ebene liegende Anströmseite 3 von dem Dichtungs- bzw. Stützelement 9 eingefasst ist. Auch an der gegenüberliegenden Abströmseite 4 befindet sich ein Dichtungs- bzw. Stützelement 10, das ebenfalls im Randbereich angeordnet und umlaufend ausgebildet ist. Die beiden Dichtungs- bzw. Stützelemente 9, 10 erstrecken sich jeweils im Randbereich an die Anströmseite 3 bzw. Abströmseite 4 und überdecken die jeweilige Stirnkante jeder Klebstoffraupe 8. Auf diese Weise ist eine axiale Kraftübertragung zwischen Anström- und Abströmseite 3, 4 zwischen den Dichtungs- bzw. Stützelementen 9, 10 über die seitlich verlaufenden Klebstoffraupen 8 gewährleistet. Insbesondere in der Einbaulage im aufnehmenden Filtergehäuse und einem aufgesetzten Gehäusedeckel, der mit Druck auf dem Filterelement 1 lastet, ist eine Aufnahme der Haltekräfte über die gegenüberliegenden Dichtungs- bzw. Stützelemente 9, 10 und die zwischenliegenden Klebstoffraupen 8 gewährleistet, so dass das Filtermaterial des Filtermediumkörpers 2 von diesen Haltekräften entlastet ist.

Vorteilhafterweise sind die Dichtungs- bzw. Stützelemente 9, 10 unmittelbar auf den Filtermediumkörper 2 aufgebracht, beispielsweise durch Angießen oder Anspritzen. Die Dichtungs- bzw. Stützelemente 9, 10 bestehen beispielsweise aus einem PUR-Material. Beide Dichtungs- bzw. Stützelemente 9, 10 liegen unmittelbar in Kontakt mit den jeweiligen Stirnkanten der Klebstoffraupen 8 und erstrecken sich außerdem bis zu den Außenseiten 6 und 7, an denen die Klebstoffraupen 8 anliegen, sowie den vorne und hinten liegenden Außenseiten des insgesamt quaderförmigen Filtermediumkörpers 2. Sowohl die Anströmseite 3 als auch die Abströmseite 4 sind jeweils eben bzw. flächig ausgebildet, Anström- und Abströmseite liegen parallel zueinander.
In das an der Anströmseite 3 liegende Dichtungs- bzw. Stützelement 9 ist eine umlaufende Aufnahmenut 11 für eine Dichtung eingebracht. Die Aufnahmenut 11 befindet sich in einem Abschnitt des Dichtungs- bzw. Stützelementes 9, der seitlich über die Außenseiten des Filtermediumkörpers 2 hinausragt. Die Aufnahmenut 11 ist in Richtung der gegenüberliegenden Abströmseite 4 hin offen ausgebildet.

Zwischen den außen liegenden Klebstoffraupen 8 befinden sich am Filtermediumkörper 2 weitere Klebstoffraupen 12, die parallel zu den außen liegenden, eine Stirnkantenverleimung bildenden Klebstoffraupen 8 verlaufen und die Filterfalten des Filtermediumkörpers 2 in Kammern unterteilen. Die Klebstoffraupen 12 können durchgehend oder gegebenenfalls unterbrochen ausgeführt sein.
Anstelle einer Dichtung kann in die Aufnahmenut 11 an dem Dichtungs- bzw. Stützelement 10 auch ein Vorsprung am aufnehmenden Filtergehäuse einragen.

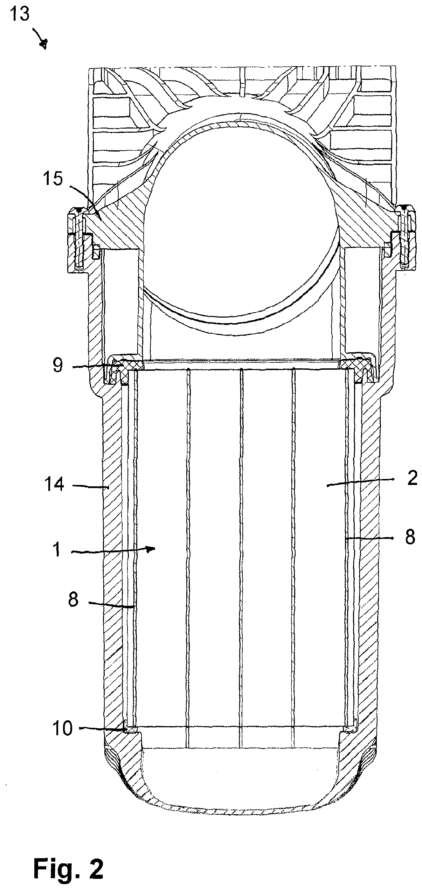

In Fig. 2 ist eine Filtereinrichtung 13 mit einem Filtergehäuse 14 und dem im Filtergehäuse 14 aufgenommenen Filterelement 1 dargestellt. Das Filtergehäuse 14 ist von einem Gehäusedeckel 15 verschlossen, wobei zur Abdichtung zwischen Filtergehäuse 14 und Gehäusedeckel 15 ein Dichtungselement angeordnet ist. Das Filterelement 1 stützt sich mit seinem untenliegenden Dichtungs- bzw. Stützelement 10 am Boden des aufnehmenden Filtergehäuses 14 ab, wohingegen das gegenüberliegende, obere Dichtungs- bzw. Stützelement 9 von dem Gehäusedeckel 15 kraftbeaufschlagt wird. Die hierbei ausgeübte Haltekraft wird über das oben liegende Dichtungs- bzw. Stützelement 9 und die Klebstoffraupen 8 in das unten liegende Dichtungs- bzw. Stützelement 10 und weiter in das aufnehmende Filtergehäuse 14 geleitet.

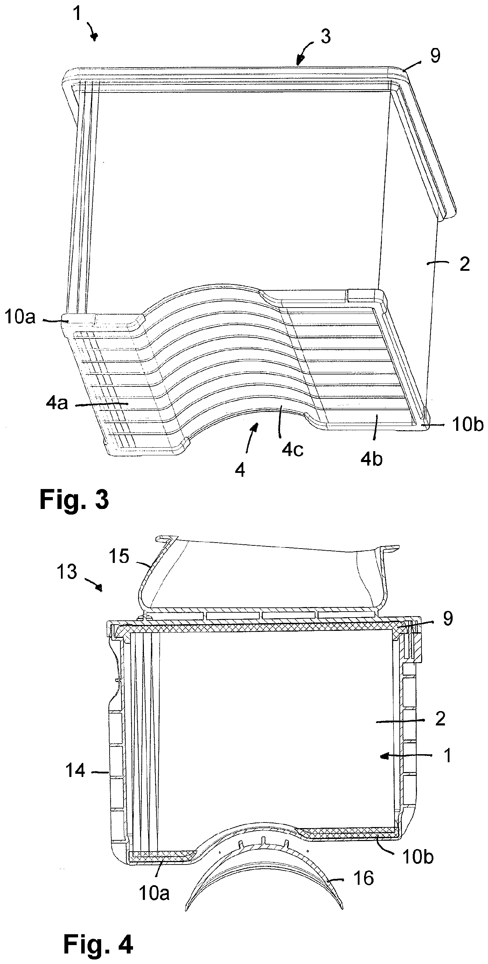

Fig. 3 zeigt das Filterelement 1 in einer erfindungsgemäßen Ausführungsform, bei der sich die Abströmseite 4 des Filtermediumkörpers 2 im Vergleich zu der Ausführung gemäß Fig. 1 unterscheidet. Auch bei Fig. 3 ist der Filtermediumkörper 2 als Faltenfilter ausgebildet und erstrecken sich Klebstoffraupen, die eine Stirnkantenverleimung bilden, an den Außenseiten zwischen dem Dichtungs- bzw. Stützelement 9 an der Anströmseite 3 und dem Dichtungs- bzw. Stützelement 10a, 10b an der Anströmseite 4. Die Anströmseite 3 ist eben ausgeführt, die Abströmseite 4 weist dagegen zwei außen liegende, ebene Abschnitte 4a und 4b und einen zwischenliegenden, nach innen gekrümmten Abschnitt 4c auf. Die beiden außen liegenden Abschnitte 4a, 4b liegen in unterschiedlicher Höhe und weisen somit einen unterschiedlichen Abstand zu der Anströmseite 3 auf, zu der die außen liegenden, abströmseitigen Abschnitte 4a, 4b parallel verlaufen. Der mittlere, gekrümmte Abschnitt 4c ist insbesondere teilkreisförmig ausgebildet und dient dazu, wie insbesondere Fig. 4 zu entnehmen, ein gehäuseseitiges Abströmrohr 16 aufzunehmen. Dies erlaubt es, wie in Fig. 4 dargestellt, den Aufnahmeraum im Filtergehäuse 14 in
optimaler Weise auszufüllen, so dass gehäuseseitig keine ungenutzten Leerräume entstehen, Aufgrund der Krümmung ändert sich innerhalb des mittleren Abschnittes 4c der Abströmseite 4 der Abstand zur gegenüberliegenden Anströmseite 3 in Abhängigkeit der aktuellen Position zwischen den außen liegenden, ebenen Abschnitten 4a und 4b.

An der Abströmseite ist das Dichtungs- bzw. Stützelement zweiteilig mit einem ersten Teil 10a an dem abströmseitigen Abschnitt 4a und einem zweiten Teil 10b an dem abströmseitigen Abschnitt 4b ausgeführt. Jeder Teil 10a, 10b ist U-förmig ausgebildet und fasst die Abschnitte 4a, 4b an den drei außen liegenden Seiten ein. Im Übergang zwischen den außen liegenden Abschnitten 4a und 4b entlang des mittleren, gekrümmt ausgeführten Abschnittes 4c befindet sich dagegen kein Dichtungs- bzw. Stützelement.

Die Klebstoffraupen an der Außenseite erstrecken sich zwischen dem oberen Dichtungs- bzw. Stützelement 9 und den beiden unten liegenden, abströmseitigen Dichtungs- bzw. Stützelementen 10a und 10b. Auf diese Weise ist trotz der Mehrteiligkeit des abströmseitigen Dichtungs- bzw. Stützelementes eine Kraftübertragung zwischen Anström- und Abströmseite über die an den Außenseiten liegenden Klebstoffraupen gewährleistet.

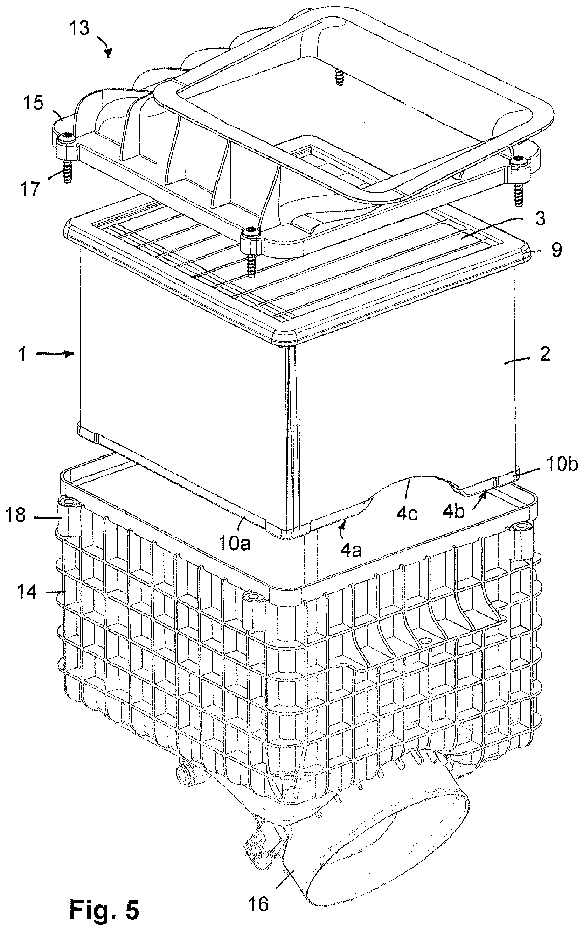

In Fig. 5 ist eine Filtereinrichtung 13 mit ihren Bauteilen in Explosionsdarstellung gezeigt. Die Filtereinrichtung 13 entspricht derjenigen aus Fig. 4 und umfasst ein Filterelement 1 gemäß Fig. 3 mit einer ebenen Anströmseite 3 und einer Abströmseite 4 mit ebenen, jedoch höhenversetzten Abschnitten 4a und 4b und einem zwischenliegenden, gekrümmten Abschnitt 4c. Der Gehäusedeckel 15 wird über Schrauben 17 mit dem Filtergehäuse 14 verschraubt, der zu diesem Zweck Gehäuseaugen 18 aufweist, in die die Schrauben 17 eingeschraubt werden.

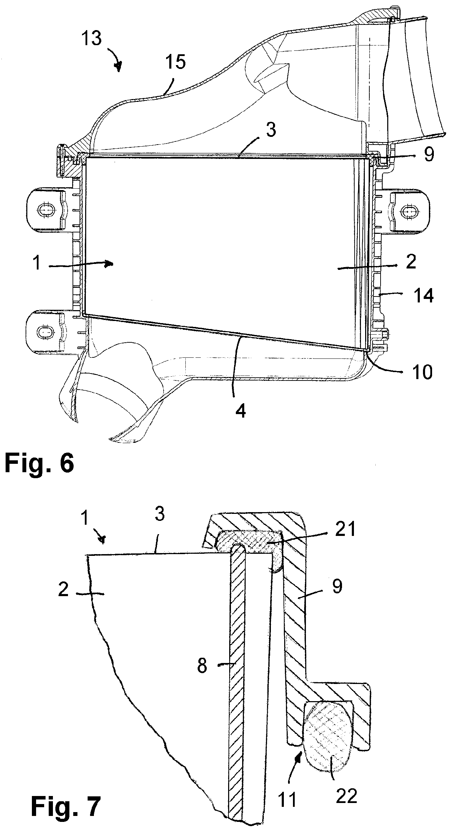

In Fig. 6 ist ein nicht erfindungsgemäßes Ausführungsbeispiel mit einem in ein Filtergehäuse 14 eingesetzten Filterelement 1 dargestellt, das zwei geradflächige, in sich ebene Anströmseiten und Abströmseiten 3, 4 aufweist, die jedoch zueinander winklig angeordnet sind. Die Anströmseite 3 liegt, bezogen auf die Einschubrichtung in das Filtergehäuse 14, orthogonal zum Filtergehäuse, wohingegen die Abströmseite 4 unter einem von 90° abweichenden Winkel zur Einschubrichtung verläuft. Der Filtermediumkörper 2 des Filterelementes 1 ist als Faltenfilter ausgeführt, der im oberen und unteren Randbereich jeweils von einem Dichtungs- bzw. Stützelement 9 bzw. 10 eingefasst ist, wobei über seitliche Klebstoffraupen Haftekräfte zwischen dem Gehäusedeckel 15 und dem Filtergehäuse 14 übertragen werden. Zu erkennen sind in Fig. 6 außerdem ein Anströmrohr für die Zufuhr von Rohluft im Gehäusedeckel 15 und ein Abströmrohr zur Ableitung gereinigter Luft am Boden des Filtergehäuses 14.

Im Ausführungsbeispiel gemäß Fig. 7 steht das Dichtungs- bzw. Stützelement 9 an der Anströmseite 3 des Filtermediumkörpers 2 nicht in einem direkten Kontakt mit der Stirnkante der Klebstoffraupe 8. Vielmehr befindet sich zwischen der Stirnkante der Klebstoffraupe 8 und dem Dichtungs- bzw. Stützelement 9 eine Dichtung 21, die sich über den Randbereich des Filtermediumkörpers 2 erstreckt und unmittelbar in Kontakt steht mit der Klebstoffraupe 8. Das Dichtungs- bzw. Stützelement 9 übergreift die Dichtung 21, so dass Haltekräfte, die auf das Dichtungs- bzw. Stützelement 9 wirken, über die Dichtung 21 auf die Klebstoffraupe 8 übertragen werden.

Zu erkennen ist außerdem in Fig. 7, dass der über die Außenseite des Filtermediumkörpers 2 hinausragende Teil des Dichtungs- bzw. Stützelementes 9 die Aufnahmenut 11 aufweist, in die eine weitere Dichtung 22 eingesetzt ist. Im montierten Zustand liegt die Dichtung 22 an einem Absatz im Filtergehäuse an.

## Patentansprüche

1. Filterelement, insbesondere zur Gasfiltration, vorzugsweise für einen Luftfilter, mit einem Filtermediumkörper (2), welcher als Faltenfilter ausgebildet ist, an dem ein Dichtungs- oder Stützelement (9, 10) angeordnet ist, **dadurch gekennzeichnet, dass** an der Anströmseite (3) und an der Abströmseite (4) jeweils ein Dichtungs- oder Stützelement (9, 10) angeordnet ist und dass die Anströmseite (3) in einer Ebene liegt und die gegenüberliegende Abströmseite (4) mindestens zwei Abschnitte (4a, 4b) mit unterschiedlichem Abstand zu der in einer Ebene liegenden Anströmseite (3) und mindestens einen insbesondere direkt zwischen zwei äußeren Abschnitten (4a, 4b) mit unterschiedlichem Abstand zu der Anströmseite (3) liegenden gekrümmten Abschnitt (4c) aufweist, wobei der gekrümmte Abschnitt (4c) in einem Teil des Abschnitts (4c) einen geringeren Abstand zu der Anströmseite (3) aufweist als die zwei äußeren Abschnitte (4a, 4b), wobei mindestens ein Dichtungs- bzw. Stützelement (9, 10) an der Anström- (3) bzw. Abströmseite (4) umlaufend ausgebildet ist, wobei das Dichtungs- bzw. Stützelement (9, 10), das an der Abströmseite (4) mit Abschnitten mit unterschiedlichem Abstand zu der in einer Ebene liegenden Anströmseite (3) liegt, nicht-durchgehend ausgebildet ist, und wobei der gekrümmte Abschnitt (4c) frei von dem Dichtungs- bzw. Stützelement (9, 10) ist.

2. Filterelement nach Anspruch 1, **dadurch gekennzeichnet, dass** die äußeren Abschnitte (4a, 4b) ebene Abschnitte, insbesondere zueinander parallele Abschnitte und/oder zur in einer Ebene liegenden Anströmseite (3) parallele Abschnitte sind.

3. Filterelement nach Anspruch 1 oder 2 **dadurch gekennzeichnet, dass** an der Außenseite des Filtermediumkörpers (2) mindestens eine sich zwischen den Dichtungs- bzw. Stützelementen (9, 10) erstreckende Klebstoffraupe (8) angeordnet ist.

4. Filterelement nach Anspruch 3, **dadurch gekennzeichnet, dass** die Klebstoffraupe (8) eine sich über mehrere Stirnkanten des Faltenfilters erstreckende Stirnkantenverleimung bildet.

5. Filterelement nach einem der Ansprüche 1 bis 4, **dadurch gekennzeichnet, dass** mindestens ein Dichtungs- bzw. Stützelement (9, 10) aus einem PUR-Material besteht.

6. Filterelement nach einem der Ansprüche 1 bis 5, **dadurch gekennzeichnet, dass** mindestens ein Dichtungs- bzw. Stützelement (9, 10) unmittelbar auf den Filtermediumkörper (2) aufgebracht ist.

7. Filterelement nach einem der Ansprüche 1 bis 6, **dadurch gekennzeichnet, dass** mindestens ein Dichtungs- bzw. Stützelement (9, 10) mindestens eine Kante des Filtermediumkörpers (2) umgreift.

8. Filterelement nach einem der Ansprüche 1 bis 7, **dadurch gekennzeichnet, dass** mindestens ein Dichtungs- bzw. Stützelement (9, 10) streifenförmig ausgebildet ist.

9. Filterelement nach einem der Ansprüche 1 bis 8, **dadurch gekennzeichnet, dass** das mindestens eine anströmseitig angeordnete Dichtungs- bzw. Stützelement (9) von dem mindestens einen abströmseitig angeordneten Dichtungs- bzw. Stützelement (10) beabstandet ist.

10. Filtereinrichtung mit einem Filterelement nach einem der Ansprüche 1 bis 9 und mit einem Filtergehäuse (14) zur Aufnahme des Filterelements (1).

## Claims

1. Filter element, in particular for gas filtration, preferably for an air filter, having a filter medium body (2) designed as folded filter, on which a sealing or support member (9, 10) is disposed, **characterized in that** a sealing or support member (9, 10) is respectively disposed on the inflow side (3) and on the outflow side (4) and that the inflow side (3) lies in a plane and the opposing outflow side (4) features at least two portions (4a, 4b) at a different distance with respect to the inflow side (3) lying in a plane and at least one curved portion (4c) lying in particular directly between two outer portions (4a, 4b) at a different distance with respect to the inflow side (3), wherein the curved portion (4c) features a shorter distance with respect to the inflow side (3) in one part of the portion (4c) than the two outer portions (4a, 4b), wherein at least one sealing or support member (9, 10) has a circumferential configuration on the inflow side (3) or on the outflow side (4), wherein the sealing or support member (9, 10), which is located on the outflow side (4) with portions at different distances from the inflow side (3) lying in a plane, is formed in a non-continuous manner, and wherein the curved portion (4c) is free of the sealing or support member (9, 10).

2. Filter element according to claim 1, **characterized in that** the outer portions (4a, 4b) are plane portions, in particular portions parallel to each other and/or parallel portions with respect to the inflow side (3) lying in a plane.

3. Filter element according to claim 1 or 2, **characterized in that** at least one adhesive bead (8) extending between the sealing or support members (9, 10) is disposed on the exterior side of the filter medium body (2).

4. Filter element according to claim 3, **characterized in that** the adhesive bead (8) forms a front edge gluing extending across a plurality of front edges of the folded filter.

5. Filter element according to one of the claims 1 to 4, **characterized in that** at least one sealing or support member (9, 10) consists of a PUR material.

6. Filter element according to one of the claims 1 to 5, **characterized in that** at least one sealing or support member (9, 10) is directly applied to the filter medium body (2).

7. Filter element according to one of the claims 1 to 6, **characterized in that** at least one sealing or support member (9, 10) surrounds at least one edge of the filter medium body (2).

8. Filter element according to one of the claims 1 to 7, **characterized in that** at least one sealing or support member (9, 10) has a strip-shaped design.

9. Filter element according to one of the claims 1 to 8, **characterized in that** the at least one sealing or support member (9) disposed on the inflow side is spaced apart from the at least one sealing or support member (10) disposed on the outflow side.

10. Filtering device with a filter element according to one of the claims 1 to 9 and with a filter housing (14) for receiving the filter element (1).

## Revendications

1. Élément filtrant, notamment destiné à la filtration de gaz, de préférence pour un filtre à air, ayant un corps de milieu filtrant (2) conçu en tant que filtre à plis sur lequel est disposé un élément d'étanchéité ou d'appui (9, 10), **caractérisé en ce qu'**un élément d'étanchéité ou d'appui (9, 10) est disposé respectivement du côté entrée (3) et du côté écoulement (4), et que le côté entrée (3) repose dans un plan et le côté écoulement opposé (4) présente au moins deux sections (4a, 4b) à une distance différente par rapport au côté entrée (3) reposant dans un plan et au moins une section incurvée (4c) reposant notamment directement entre deux sections extérieures (4a, 4b) à une distance différente par rapport au côté entrée (3), dans lequel la section incurvée (4c) présente dans une partie de la section (4c) une distance plus réduite par rapport au côté entrée (3) que les deux sections extérieures (4a, 4b), dans lequel au moins un élément d'étanchéité ou d'appui (9, 10) est formé de manière circonférentielle du côté entrée (3) ou du côté écoulement (4), dans lequel l'élément d'étanchéité ou d'appui (9, 10), qui est situé du côté écoulement (4) avec des sections à différentes distances par rapport au côté d'entrée (3) se reposant dans un plan, n'est pas formé de manière continue, et dans lequel la partie incurvée (4c) est dépourvue de l'élément d'étanchéité ou d'appui (9, 10).

2. Élément filtrant selon la revendication 1, **caractérisé en ce que** les sections extérieures (4a, 4b) sont des sections planes, notamment des sections parallèles les unes aux autres et/ou des sections parallèles par rapport au côté entrée (3) reposant dans un plan.

3. Élément filtrant selon la revendication 1 ou 2, **caractérisé en ce qu'**au moins un cordon de colle (8) s'étendant entre les éléments d'étanchéité ou d'appui (9, 10) est disposé sur la face extérieure du corps de milieu filtrant (2).

4. Élément filtrant selon la revendication 3, **caractérisé en ce que** le cordon de colle (8) forme un collage des arêtes frontales s'étendant sur plusieurs arêtes frontales du filtre à plis.

5. Élément filtrant selon l'une quelconque des revendications 1 à 4, **caractérisé en ce qu'au** moins un élément d'étanchéité ou d'appui (9, 10) est fait d'un matériau PUR.

6. Élément filtrant selon l'une quelconque des revendications 1 à 5, **caractérisé en ce qu'au** moins un élément d'étanchéité ou d'appui (9, 10) est directement appliqué sur le corps de milieu filtrant (2).

7. Élément filtrant selon l'une quelconque des revendications 1 à 6, **caractérisé en ce qu'au** moins un élément d'étanchéité ou d'appui (9, 10) entoure au moins un bord du corps de milieu filtrant (2).

8. Élément filtrant selon l'une quelconque des revendications 1 à 7, **caractérisé en ce qu'au** moins un élément d'étanchéité ou d'appui (9, 10) est conçu en forme de bande.

9. Élément filtrant selon l'une quelconque des revendications 1 à 8, **caractérisé en ce que** l'élément d'étanchéité ou d'appui (9), au moins au nombre d'un, disposé côté entrée est situé à une certaine distance de l'élément d'étanchéité ou d'appui (10), au moins au nombre d'un, disposé côté écoulement.

10. Dispositif de filtration avec un élément filtrant selon l'une des revendications 1 à 9 et avec un boîtier de filtre (14) pour recevoir l'élément filtrant (1).
